# EUROPÄISCHE PATENTSCHRIFT

(11) **EP 1 749 395 B1**
(45) Veröffentlichungstag und Bekanntmachung des Hinweises auf die Patenterteilung: **26.09.2007**
(21) Anmeldenummer: 05759417.8
(22) Anmeldetag: 26.05.2005
(51) Int. Cl.: H04M 3/38, H04M 3/487

(54) **VERFAHREN ZUM AUTORISIEREN EINER FERNMÜNDLICHEN TRANSAKTION UND VERMITTLUNGSKNOTEN**
METHOD FOR AUTHORIZING A TELEPHONE TRANSACTION AND SWITCHING NODE
PROCEDE D'AUTORISATION D'UNE TRANSACTION TELEPHONIQUE ET NOEUD DE COMMUTATION

(30) Priorität: 26.05.2004 DE 102004026349
(43) Veröffentlichungstag der Anmeldung: 07.02.2007
(73) Patentinhaber: Tenovis GmbH & Co. KG, 60362 Frankfurt (DE)
(72) Erfinder: MENK, Klaus-Dieter, 65597 Hünefeld-Ohren (DE); MAYER, Axel, 83026 Rosenheim (DE)
(74) Vertreter: Tergau & Pohl Patentanwälte
(86) Internationale Anmeldenummer: PCT/DE2005/000976
(87) Internationale Veröffentlichungsnummer: WO 2005/117404

(56) Entgegenhaltungen:
- EP-A- 1 172 771
- US-A- 5 806 040
- US-B1- 6 535 582

## Beschreibung

Die Erfindung bezieht sich auf die Autorisierung einer fernmündlichen Transaktion mittels Stimmerkennung und insbesondere auf ein Verfahren zum Autorisieren eines Zugriffs auf Information durch einen Anwender, bei dem der Anwender durch eine interaktive Spracheinrichtung veranlasst wird, eine Stimmprobe abzugeben, die Stimmprobe mit einem Vergleichsdatensatz verglichen wird und der Zugriff auf die gewünschte Information durch den Anwender durch die interaktive Spracheinrichtung in Abhängigkeit von dem Vergleichsergebnis freigegeben wird, sowie auf einen entsprechenden Vermittlungsknoten.

Die fernmündliche Authentifizierung mittels Stimmerkennung gewinnt bei Sprachdialoganwendungen im öffentlichen Telefonnetz immer mehr an Bedeutung. Bevor ein Anwender die Dienstleistung (z.B. Telefon-Banking) eines Dienstanbieters in Anspruch nehmen kann, muss er sich identifizieren. Dazu liegen bei dem Dienstanbieter ein oder mehrere Sprachmuster des Anwenders vor. Der Anwender identifiziert sich in diesem Fall, indem er seinen Namen oder seine Anwender-/Zugangs-Nummer eingibt und dann ein Sprachmuster nachspricht. Durch Vergleich mit dem hinterlegten Sprachmuster wird der Anwender identifiziert und kann anschließend bei positivem Vergleichsergebnis seine Transaktionen steuern.

Da die Analyse der Sprache (Sprecheridentifikation bzw. -verifikation) sehr aufwändig ist, wird dazu meist ein dediziertes System (im folgenden Authentifizierungssystem genannt) verwendet. Es gibt dazu eine Reihe von Produkten, die dies als eigenständige Lösung realisieren und dafür proprietäre oder Voice-XML-Schnittstellen zur Verfügung stellen.

Aus EP 1 172 771 ist ein Verfahren zur Autorisierung einer kommerziellen Transaktion zwischen einem Kunden und einem Waren- oder Dienstleistungsanbieter durch einen Autorisierungsdienstleister mit Authentifizierung des Kunden durch Vergleich einer biometrischen Probe des Kunden mit einem beim Autorisierungsdienstleister gespeicherten biometrischen Muster des Kunden bekannt. Der Autorisierungsvorgang umfasst hierbei die Schritte (a) Aufbau einer Telefonverbindung über ein Kommunikationsnetzwerk zwischen dem Anbieter und dem Autorisierungsdienstleister über einen Router, wobei der Router einer virtuellen Telefonnummer die reale Telefonnummer des Autorisierungsdienstleisters zuweist sowie die Telefonnummer des Anbieters und einen Code überträgt, der zeitgleich durch den Router und den Autorisierungsdienstleister mit Hilfe desselben Algorithmus errechnet wird, (b) Annahme der Telefonverbindung durch den Autorisierungsdienstleister, wenn der Anbieter unter der übertragenen Telefonnummer beim Autorisierungsdienstleister registriert ist und der übertragene Code mit dem beim Autorisierungsdienstleister errechneten Code übereinstimmt, (c) Übermittlung einer der Identifizierung des Kunden dienenden Kennung vom Kunden zum Autorisierungsdienstleister über die aufgebaute Telefonverbindung, (d) Übermittlung einer biometrischen Probe des Kunden über die aufgebaute Telefonverbindung, (e) Übermittlung der Höhe des zu transferierenden Betrages und etwaiger weiterer für die Transaktion benötigter Daten vom Kunden zum Autorisierungsdienstleister über die aufgebaute Telefonverbindung, (f) Einleitung der Transaktion durch den Autorisierungsdienstleister, wenn die Übereinstimmung zwischen der biometrischen Probe und dem gespeicherten biometrischen Muster des Kunden größer als ein vorbestimmter Schwellenwert ist, aufweist.

Aus US 5 806 040 sind ein Verfahren und eine Vorrichtung zum Verifizieren der Identität einer Person unter Verwendung einer Telefonkarte, Bankkarte oder Kreditkarte bekannt. Dabei stellt das System eine Verbindung zwischen dem Anwender der Karte und einem Telefonnetz her, wobei der Anwender die Kartennummer eingibt. Die Kartennummer wird verwendet, um über das Telefonnetz auf eine zentrale Datenbank zuzugreifen, wobei ein Stimmerkennungsmuster geladen wird, das der eingegebenen Kartennummer entspricht. Die Stimmerkennung umfasst verschiedene Proben von der Stimme des Anwenders bei der Aussprache ausgewählter Worte, Sätze und/oder Ziffern. Sobald das entsprechende Stimmerkennungsmuster geladen worden ist, veranlasst das System den Anwender, eines der Worte, einen der Sätze und/oder eine der Ziffern auszusprechen, die sich in dem Stimmerkennungsmuster befinden. Wort, Satz und/oder Ziffer, die auf die Aufforderung hin gesprochen werden, wird mit dem Stimmerkennungsmuster verglichen. Wenn die gesprochenen Worte mit dem Muster übereinstimmen, wird angenommen, dass der Anwender autorisiert ist, und die Karte wird freigegeben. Wenn die gesprochenen Worte nicht mit dem Muster übereinstimmen, kann dem Anwender die Autorisierung in Abhängigkeit von der Verwendung der Karte und dem finanziellen Rahmen der Karte verweigert werden oder nicht.

Bei Sprachdialogsystemen dieser Art ist es notwendig, Schnittstellen vorzusehen und einen erheblichen Aufwand bei der Anpassung von Systemen zu betreiben, um die Identifikation bzw. Sprecherverifikation in ihre Abläufe einzubinden, zumal wenn eine Telefonanlage mit einem Authentifizierungssystem nachgerüstet werden soll und/oder die Telefonanlage und das Authentifizierungssystem von verschiedenen Herstellern stammen.

Aus US 6535582 B1 ist ein Verfahren zum Autorisieren eines Zugriffs auf eine Datenbank durch einen Anwender in einem Telekommunikationsnetz, wobei das Telekommunikationsnetz eine Anwenderschnittstelle, eine Zugangskontrolle für die Datenbank und eine Authentifizierungseinrichtung aufweist bekannt.

Aufgabe der vorliegenden Erfindung ist es, ein Verfahren zum Autorisieren einer fernmündlichen Transaktion anzugeben, d.h. ein Verfahren, mit dem die Autorisierung des Zugangs zu Daten über ein öffentliches Telefonnetz zuverlässig gewährleistet ist und gleichzeitig der Aufwand in Bezug auf die Vernetzung von Anwender, interaktivem Sprachdialogsystem und Authentifizierungseinrichtung vereinfacht wird. Insbesondere soll so eine Nachrüstung bereits bestehender Systeme ermöglicht werden.

Diese Aufgabe wird erfindungsgemäß durch das Verfahren nach Anspruch 1 und durch den Vermittlungsknoten nach Anspruch 9 gelöst. Bevorzugte Ausführungsformen der Erfindung sind Gegenstand der Unteransprüche.

Das erfindungsgemäße Verfahren zum Autorisieren eines Zugriffs auf eine Datenbank durch einen Anwender in einem Telekommunikationsnetz, wobei das Telekommunikationsnetz eine Anwenderschnittstelle, eine Zugangskontrolle für die Datenbank und eine Authentifizierungseinrichtung aufweist, die über einen Vermittlungsknoten in dem Telekommunikationsnetz miteinander verbunden sind, das die Schritte aufweist: Veranlassen des Anwenders durch die Zugangskontrolle, eine Stimmprobe abzugeben, Vergleichen der Stimmprobe mit einem Vergleichsdatensatz, der dem Anwender zugeordnet ist und vorab in einem Speicher abgespeichert worden ist, durch die Authentifizierungseinrichtung, Freigabe oder Verweigerung des Zugriffs auf die gewünschte Information durch den Anwender in Abhängigkeit von dem Vergleichsergebnis durch die Zugangskontrolle ist dadurch gekennzeichnet, dass das Vergleichsergebnis von der Authentifizierungseinrichtung über den Vermittlungsknoten an die Zugangskontrolle ausgegeben wird und das Vergleichsergebnis durch die Zugangskontrolle dem Anwender über den Vermittlungsknoten mitgeteilt wird, wobei Signale von der Authentifizierungseinrichtung ausgeblendet werden.

Insbesondere ist das Telekommunikationsnetz ein ISDN-Netz.

In einer bevorzugten Ausführungsform des erfindungsgemäßen Verfahrens werden die B-Kanäle des ISDN-Netzes derart verschaltet, dass nur jeweils derjenige Empfangszeitschlitz für Signale von der Authentifizierungseinrichtung mit einem Sendezeitschlitz für Signale für das Anwendertelefon gemischt wird, in welchem keine Authentifizierungssignale empfangen wurden.

Vorzugsweise wird das Vergleichsergebnis in Form von DTMF-Sequenzen zwischen Authentifizierungseinrichtung und der Zugangskontrolle übertragen.

Bei einer weiteren bevorzugten Ausführungsform der Erfindung umfasst die Stimmprobe wenigstens eine Sequenz mit mehreren Silben oder Worten, wobei der Anwender mehrmals aufgefordert wird, ein Wort und/oder eine Silbe auszusprechen, wobei jeweils eine Stimmprobe aufgezeichnet wird, die mehreren Stimmproben jeweils mit einem Vergleichsdatensatz verglichen werden, wobei eine Trefferquote ermittelt wird, und die Freigabe oder Verweigerung des Zugriffs auf die gewünschte Information durch den Anwender in Abhängigkeit von der ermittelten Trefferquote durch die interaktive Spracheinrichtung erfolgt.

Besonders bevorzugt wird eine Sprachfilterung zum Beseitigen von Störungen der Telefonleitung angewendet.

Insbesondere erfolgt die Ausblendung von Signalen von der Authentifizierungseinrichtung aus den Signalen von der Zugangskontrolle für den Anwender in dem Vermittlungsknoten.

In einer bevorzugten Ausführungsform der Erfindung ist die Zugangskontrolle ein interaktives Sprachsystem.

Der entsprechende erfindungsgemäße Vermittlungsknoten zum Vermitteln von Signalen in einem Telekommunikationsnetz zwischen einem Anwendertelefon, einer Authentifizierungseinrichtung und einer Datenbank zum Autorisieren eines Zugriffs auf eine Datenbank durch einen Anwender in einem Telekommunikationsnetz ist dadurch gekennzeichnet, dass diejenigen Signale, die von der Authentifizierungseinrichtung an die Zugangskontrolle der Datenbank gesendet wurden, aus den Signalen von der Zugangskontrolle der Datenbank an das Anwendertelefon ausgeblendet werden.

Bei einer bevorzugten Ausführungsform ist der Vermittlungsknoten ein ISDN- Vermittlungsknoten, bei dem die B-Kanäle derart verschaltet werden, dass nur jeweils derjenige Empfangszeitschlitz für Daten von der Authentifizierungseinrichtung mit einem Sendezeitschlitz für Daten für das Anwendertelefon gemischt wird, in welchem keine Authentifizierungssignale empfangen wurden.

Besonders bevorzugt umfasst der Vermittlungsknoten eine Sprachfilterung zum Beseitigen von Störungen der Telefonleitung.

Ein Vorteil der beschriebenen Lösung besteht darin, dass keine Sicherheitsprobleme auftreten, da außer dem Sprachkanal keine weitere Schnittstelle zu dem vorhandenen Authentifizierungssystem benötigt wird. Insbesondere ist damit auch die Möglichkeit des Abhörens der Kommunikation zwischen der Authentifizierungseinrichtung und der Datenbank unterbunden, so dass schon grundsätzlich keine Gelegenheit zum Mitschneiden von Signalen von der Authentifizierungseinrichtung zur Freigabe/Zugangsverweigerung besteht. Ferner kann bei dem erfindungsgemäßen Verfahren und dem entsprechenden erfindungsgemäßen Vermittlungsknoten die eigentliche Authentifizierungseinrichtung nachträglich und an einem beliebigen Ort in dem Telekommunikationsnetz eingerichtet werden.

Weitere Vorteile, Eigenschaften und Merkmale der erfindungsgemäßen Lösung ergeben sich aus der folgenden Beschreibung von bevorzugten Ausführungsformen, bei der Bezug genommen wird auf die beigefügten Zeichnungen.

Fig. 1 zeigt schematisch ein System zur Durchführung einer Transaktion über ein öffentliches Telekommunikationsnetz gemäß dem Stand der Technik.

Fig. 2 zeigt schematisch ein erfindungsgemäßes System zur Durchführung einer Transaktion über ein öffentliches Telekommunikationsnetz.

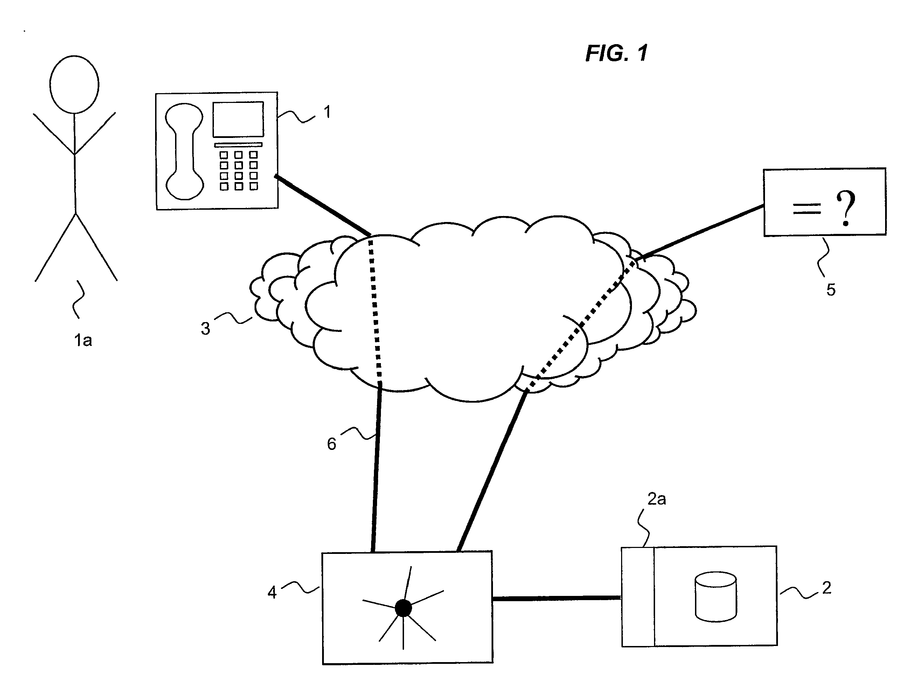

Im folgenden wird anhand von Fig. 1 die Durchführung einer Transaktion über ein öffentliches Telekommunikationsnetz gemäß dem Stand der Technik beschrieben, bei der vorab eine Authentifizierung erfolgt, d.h. die Zugangsberechtigung durch eine zweifelsfreie Identifizierung des Nutzers überprüft wird.

In Fig. 1 ist ein Anwender 1a über sein Telefon 1 mit einem Telekommunikationsnetz 3 verbunden. Über das Telekommunikationsnetz 3 kann er grundsätzlich auf eine ebenfalls mit dem Telekommunikationsnetz 3 verbundene Datenbank 2 zugreifen. Für den Fall, dass in dieser Datenbank persönliche und vertrauliche Daten gespeichert werden, soll der Zugriff auf die Daten natürlich auf den tatsächlich berechtigten Personenkreis beschränkt bleiben. Zu diesem Zweck ist der Datenbank 2 eine Zugangskontrolle 2a vorgeschaltet, die vor dem Zugang zu den Daten die Berechtigung des Anwenders überprüft, von dem eine entsprechende Anfrage eingeht.

Für den Fall, dass die Authentifizierung des Anwenders über eine Stimmprobe erfolgen kann, wird die Anfrage des Anwenders 1a von der Zugangskontrolle 2a an einen Vermittlungsknoten 4 zurückgesendet, von dem sie wiederum an eine externe Authentifizierungseinrichtung 5 weitergeleitet wird. Der Vermittlungsknoten ist ein üblicher Knoten, der sich innerhalb oder außerhalb des Netzes 3 befindet. Wenn das Telekommunikationsnetz ein ISDN-Netz ist, so wird in dem Vermittlungsknoten 4 jeweils ein Sendezeitschlitz mit einem Empfangszeitschlitz gemischt, so dass die miteinander verbundenen Teilnehmer wie über eine Festleitung miteinander kommunizieren können. Mit anderen Worten, ein Teilnehmer hört alle Signale, die von den beiden anderen Teilnehmern erzeugt werden, es gibt keine Filterung.

In der Authentifizierungseinrichtung 5 wird die Stimmprobe des Anwenders 1a mit Vergleichsdaten verglichen, die in einem (nicht dargestellten) lokalen Speicher für diesen Anwender vorab abgelegt wurden. Die richtige Zuordnung der Vergleichsdaten zu dem Anwender kann dabei über eine eingegebene Zugangs- oder Identifizierungsnummer erfolgen, die wiederum gesprochen oder als Ziffer eingegeben werden kann. Das Ergebnis des Vergleichs wird über die gleichen Leitungen 6 wie bei der Übermittlung der Anfrage an die Zugangskontrolle 2a zurückgeschickt. Von der Zugangskontrolle 2a erhält der Anwender dann die Freigabe für den Zugriff auf die Datenbank 2, oder es wird ihm mitgeteilt, dass er für den Zugriff keine Berechtigung besitzt. Die Benachrichtigung der Zugangskontrolle 2a durch die Authentifizierungseinrichtung 5 kann über eine API- (Application Programming Interface) Schnittstelle erfolgen.

Insbesondere ist die Zugangskontrolle 2a ein interaktives Sprachsystem, so dass der Anwender 1a durch das dortige Personal aufgefordert werden kann, ein zufällig ausgewähltes Wort oder eine zufällig ausgewählte Silbe oder eine zufällig ausgewählte Ziffer etc. nachzusprechen, wobei der gesprochene Text dann wie beschrieben in der Authentifizierungseinrichtung 5 mit vorab gespeicherten Vergleichsdaten verglichen wird.

Eine Anwendungsmöglichkeit ist z.B. eine Geldtransaktion durch einen Bankmitarbeiter nach einer vorausgegangenen Authentifizierung. Dabei ruft der Kunde (Anrufer) 1a beispielsweise seine Bank an und wird zu einem Sprachdialogsystem geleitet. Das Sprachdialogsystem richtet eine Konferenzschaltung mit dem Kunden und mit dem Authentifizierungssystem als Teilnehmern ein. Die weitere Steuerung der Authentifizierung übernimmt das Authentifizierungssystem 5. Bei dieser Authentifizierung wird beispielsweise ein vordefinierter Satz abgefragt und mit einem Muster verglichen. Die Quittierung der Authentifizierung an das Sprachdialogsystem 2a geschieht über DTMF, d.h. das Authentifizierungssystem 5 sendet definierte DTMF-Sequenzen, mit denen der Erfolg bzw. der Fehlschlag der Authentifizierung gemeldet wird.

Bei der oben beschriebenen Konferenzschaltung mit dem Anwendertelefon 1, dem Vermittlungsknoten 4, der Datenbank 2 und der Authentifizierungseinrichtung 5, die über das Netz 3 miteinander verbunden sind, besteht die Gefahr, dass ein Lauscher oder der Anrufer selbst die Quittierungssignale aufzeichnet und sie bei einer nächsten Authentifizierungsprozedur einspielt, um so das System zu überlisten und einen Zugang zu vertraulichen Daten zu erlangen, der ihm ansonsten verwehrt geblieben wäre.

Um eine derartige, in betrügerischer Absicht versuchte Umgehung des Systems zu unterbinden, wird erfindungsgemäß eine Konferenzschaltung aufgebaut, bei der die Antwort des Authentifizierungssystems nur vom Sprachdialogsystem empfangen wird, nicht aber vom Anrufer selbst.

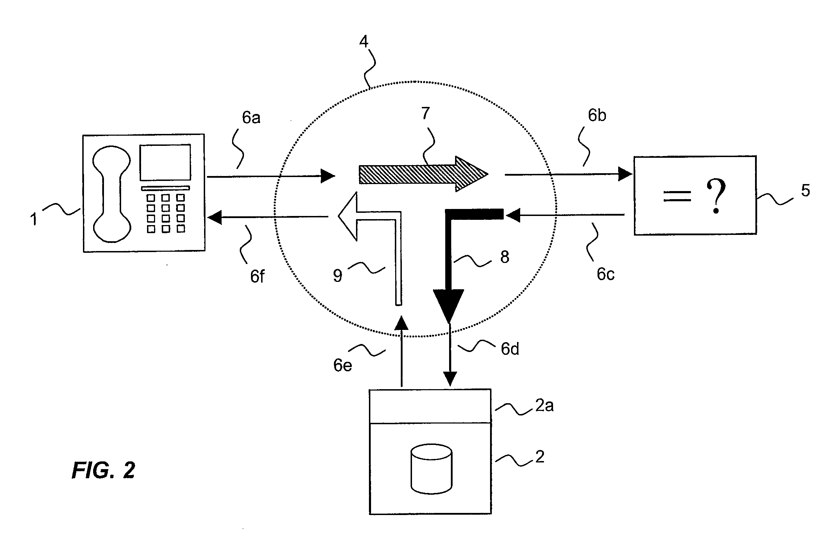

Anhand von Fig. 2 wird im folgenden eine "Remote- Authentifizierung" oder "Fern- Authentifizierung" als Ausführungsbeispiel der Erfindung beschrieben.

Der Anrufer gibt über den Telefonhörer bzw. die Tastatur seines Telefons 1 Daten ein, anhand derer eine Verbindung mit der Zugangskontrolle 2a zu der Datenbank 2 hergestellt wird. Dies können eine Zugangsnummer, eine Geheimnummer (PIN) oder auch ein Sprachsignal sein. Diese Daten werden über das Telfonnetz 3 zunächst an den Vermittlungsknoten 4 weitergeleitet. In dem Vermittlungsknoten 4 werden diejenigen Daten, die für eine Authentifizierung benötigt werden, an die Authentifizierungseinrichtung 5 weitergeleitet, also beispielsweise sowohl DTMF-Signale, die über die Tastatur des Anwendertelefons 1 eingegeben wurden, als auch Sprachsignale, die über den Hörer des Anwendertelefons 1 eingegeben wurden. Es können aber auch nur die Sprachsignale von dem Anrufer an die Authentifizierungseinrichtung 5 übermittelt werden. In der Authentifizierungseinrichtung 5 werden wenigstens einige der charakteristischen Daten von dem Anrufer mit einem Datensatz verglichen, der vorher für diesen Anrufer abgespeichert worden war.

Von der Zugangskontrolle 2a der Datenbank 2 wird der Anwender aufgefordert, bestimmte Worte, Silben, Sätze, Ziffern u. dgl. nachzusprechen. Diese Sprachdaten werden - ggfs. digitalisiert - direkt oder von der Zugangskontrolle 2a über den Vermittlungsknoten 4 an die Authentifizierungseinrichtung 5 geschickt. In Fig. 2 ist eine Ausführungsform dargestellt, bei der die Daten direkt von dem Anwendertelefon 1 zur Authentifizierungseinrichtung 5 gesendet werden. In der Authentifizierungseinrichtung 5 werden wie oben mit Bezug auf Fig. 1 erläutert die Sprachdaten mit vorab gespeicherten Muster- oder Vergleichsdaten verglichen.

Das Vergleichsergebnis wird von der Authentifizierungseinrichtung 5 über den Vermittlungsknoten 4 der Zugangskontrolle 2a der Datenbank 2 mitgeteilt, vorzugsweise über eine Standardtelefonleitung 6 mittels einer DTMF-Sequenz. In der Zugangskontrolle 2a der Datenbank 2 wird das Ergebnis empfangen und analysiert. Anschließend wird das Ergebnis von der Zugangskontrolle der Datenbank 2 dem Anwender über den Vermittlungsknoten 4 und die Standardtelefonleitung 6, über die er mit dem Vermittlungsknoten 4 verbunden ist, mitgeteilt. Um ein Mitschneiden des Ergebnisses von der Authentifizierungseinrichtung 5 zu verhindern, erfolgt die Mitteilung an den Anwender jedoch nicht in Form derselben DTMF-Signale, mit denen das Ergebnis von der Authentifizierungseinrichtung 5 der Zugangskontrolle 2a der Datenbank 2 signalisiert wurde, sondern beispielsweise in der Form von Sprachsignalen - wenn die Zugangskontrolle in Form eines "Call-Centers"- mit Personen besetzt ist - oder auch in der Form von weiteren DTMF-Signalen, die jedoch nach einem neuen "Alphabet" gebildet werden, so dass sie sich von den DTMF-Sequenzen der Authentifizierungseinrichtung 5 unterscheiden.

Im folgenden wird die Funktion des Vermittlungsknoten 4 bei dem erfindungsgemäßen Verfahren mit weiteren Einzelheiten beschrieben. Die Datenflüsse über die Leitung 6 bei der Kommunikation von Anwender, Zugangskontrolle 2a, Authentifizierungseinrichtung 5 und Vermittlungsknoten 4 bilden einen geschlossenen Pfad, nämlich ein Datenfluss 6a von dem Anwendertelefon 1 zu dem Vermittlungsknoten 4, ein Datenfluss 6b von dem Vermittlungsknoten 4 zu der Authentifizierungseinrichtung 5, ein Datenfluss 6c von der Authentifizierungseinrichtung 5 zu dem Vermittlungsknoten 4, ein Datenfluss 6d von dem Vermittlungsknoten 4 zu der Datenbank 2 bzw. deren vorgeschaltetem interaktiven Sprachdialogsystem 2a, ein Datenfluss 6e von der Datenbank 2 bzw. deren vorgeschaltetem Sprachdialogsystem 2a zu dem Vermittlungsknoten 4 und ein Datenfluss 6f von dem Vermittlungsknoten 4 zu dem Anwendertelefon 1.

Dabei werden durch die Datenflüsse 6a und 6b über den Vermittlungsknoten 4 Sprach- und sonstige Signale von dem Anwendertelefon 1 zur Authentifizierungseinrichtung 5 übertragen. Diese Daten sind durch den schraffierten Pfeil 7 angedeutet. Die Daten, die als Datenflüsse 6c und 6d von der Authentifizierungseinrichtung 5 über den Vermittlungsknoten 4 an das interaktive Sprachdialogsystem 2a übertragen werden, enthalten ggfs. die Sprachsignale des Anrufers und außerdem Signale, die das Ergebnis des Vergleichs der Sprachsignale des Anrufers mit entsprechenden abgespeicherten Proben anzeigen. Die letzteren signale sind vorzugsweise DTMF-Signale. Die Daten sind in Fig. 2 durch einen zweiten, schwarzen Pfeil 8 angedeutet. In dem Sprachdialogsystem 2a werden die DTMF-Signale von der Authentifizierungseinrichtung 5 herausgefiltert, so dass nur noch "unkritische" Signale bleiben, nämlich die Mitteilung an den Anwender 1a, dass er auf die Datenbank 2 zugreifen kann bzw. nicht. Diese Nachrichtensignale werden als Datenflüsse 6e und 6f über den Vermittlungsknoten 4 zu dem Anwendertelefon 1 geschickt.

Die Filterung der DTMF-Signale von der Authentifizierungseinrichtung 5 aus den Signalen wird durch eine entsprechende Verschaltung der B- (Signalisierungs-) Kanäle erreicht, wobei nur jeweils derjenige Empfangszeitschlitz für Daten von der Authentifizierungseinrichtung 5 in dem Vermittlungsknoten 4 mit einem Sendezeitschlitz für Daten für das Anwendertelefon 1 gemischt wird, in welchem keine Authentifizierungssignale empfangen wurden. Ggfs. heißt dies, dass überhaupt kein Empfangszeitschlitz für Daten von der Authentifizierungseinrichtung 5 in dem Vermittlungsknoten 4 mit einem Sendezeitschlitz für Daten für das Anwendertelefon 1 gemischt wird. Damit kommt die Antwort der Authentifizierungseinrichtung 5 nur zu der Datenbank 2 bzw. ihrem vorgeschalteten Sprachdialogsystem 2a. Mit anderen Worten: Die Datenflüsse 6e und 6f von der Datenbank 2 bzw. ihrem vorgeschalteten Sprachdialogsystem 2a über den Vermittlungsknoten 4 an das Anwendertelefon 1 und damit an den Anrufer enthalten keinerlei Signale von der Authentifizierungseinrichtung 5 mehr und können daher nicht missbräuchlich verwendet werden. Diese Daten sind in Fig. 2 daher durch einen weißen Pfeil 9 dargestellt, in dem keine Authentifizierungssignale mehr enthalten sind.

Damit lässt sich das System wie eine Dreierkonferenzschaltung betreiben, bei der kritische Daten nur von einem ersten Teilnehmer an einen fest vorgegebenen zweiten Teilnehmer übermittelt werden. So werden die Antworten des Anrufers auf Aufforderungen des Sprachdialogsystems ("Sprechen Sie mir nach ...") sofort von der Authentifizierungseinrichtung 5 aufgezeichnet und analysiert. Die Kommunikation zwischen der Authentifizierungseinrichtung und dem Sprachdialogsystem geschieht über DTMF und ist vom Anrufer nicht zu hören, da diese Tonsequenzen weggefiltert werden.

Über eine Programm-Schnittstelle (application programming interface, API) wird das Sprachdialogsystem 2a der Datenbank 2 über eine positive Authentifizierung benachrichtigt. Die Applikation benötigt bei der erfindungsgemäßen Ausführungsform keine Datenverbindung zu dem Authentifizierungssystem 5.

Neben der Kommunikation über DTMF-Sequenzen ist auch eine Auswertung der Sprache (Spracherkennung) in der Authentifizierungseinrichtung 5 möglich. In diesem Fall sind keine Anpassungen des Authentifizierungssystems nötig. Die Spracherkennung hat in diesem Fall eine 100%-ige Trefferquote, da die Textsequenzen in dem Authentifizierungssystem fest programmiert sind. Eine Ansage über eine erfolgreiche Authentifizierung kann von der Fern-Authentifizierung erkannt werden.

Die Erfindung hat damit den Vorteil, dass die Kommunikation zwischen einem Authentifizierungssystem und einem Sprachdialogsystem realisiert werden kann, ohne dass eine andere als die Telefon-Schnittstelle verwendet zu werden braucht. Das Authentifizierungssystem 5 kann sich hierbei an jedem beliebigen Standort mit Netzanschluss befinden.

In der bisherigen Beschreibung wurde davon ausgegangen, dass die Trennung der Authentifizierungssignale und der Signale, die für den Anwender bestimmt sind, in dem Vermittlungsknoten 4 erfolgt. Dem Fachmann ist jedoch klar, dass dies nur ein Beispiel ist und dass diese Trennung der Signale genauso gut in der eigentlichen Zugangskontrolle, d.h. einer ISDN-Karte oder dem interaktiven Sprachdialogsystem 2a erfolgen kann.

Ferner ist das erfindungsgemäße Verfahren nicht auf einen Authentifizierungsversuch beschränkt, sondern es können mehrere Versuche zugelassen werden, bei denen dann auch gegebenenfalls eine Mittlung der Einzelergebnisse der Authentifizierung erfolgen kann. Mit anderen Worten: Es wird eine Stimmprobe aufgenommen, die wenigstens eine Sequenz mit mehreren Silben oder Worten umfasst, d.h. der Anwender wird mehrmals aufgefordert (standardmäßig oder in Abhängigkeit von den vorangehenden Authentifizierungsergebnissen), ein Wort und/oder eine Silbe auszusprechen, wobei jeweils eine Stimmprobe aufgezeichnet wird. Die einzelnen Stimmproben werden jeweils mit einem Vergleichsdatensatz verglichen, wobei eine Gesamttrefferquote ermittelt wird, d.h. ein Quotient aus den erfolgereichen Versuchen und der Gesamtzahl der Versuche. Die Freigabe oder Verweigerung des Zugriffs auf die gewünschte Information durch den Anwender erfolg dann in Abhängigkeit von der ermittelten Trefferquote durch die Zugangskontrolle 2a.

Um in diesem Zusammenhang Fehlversuche aufgrund von Leitungsstörungen möglichst zu vermeiden, wird vorzugsweise eine (nicht dargestellte) Sprachfilterung zum Beseitigen von Störungen der Telefonleitung angewendet.

### Bezugszeichen

- 1: Anwendertelefon, 1a Anwender
- 2: Datenbank, 2a Zugangskontrolle, insbes. interaktives Sprachsystem
- 3: Telekommunikationsnetz
- 4: Vermittlungsknoten
- 5: Authentifizierungseinrichtung
- 6: Zugangsleitung, 6a - 6f Datenflüsse
- 7: Identifizierungssignal von Anwender
- 8: Vergleichsergebnis von Authentifizierungseinrichtung
- 9: Authentifizierungsergebnis von Datenbankzugangskontrolle

## Patentansprüche

1. Verfahren zum Autorisieren eines Zugriffs auf eine Datenbank (2) durch einen Anwender in einem Telekommunikationsnetz (3), wobei das Telekommunikationsnetz (3) eine Anwenderschnittstelle (1), eine Zugangskontrolle (2a) für die Datenbank (2) und eine Authentifizierungseinrichtung (5) aufweist, die über einen Vermittlungsknoten (4) in dem Telekommunikationsnetz (3) miteinander verbunden sind, wobei das Verfahren die Schritte umfasst:
Veranlassen des Anwenders durch die Zugangskontrolle (2a), eine Stimmprobe abzugeben,
Vergleichen der Stimmprobe mit einem Vergleichsdatensatz, der dem Anwender zugeordnet ist und vorab in einem Speicher abgespeichert worden ist, durch die Authentifizierungseinrichtung (5),
Freigabe oder Verweigerung des Zugriffs auf die gewünschte Information durch den Anwender in Abhängigkeit von dem Vergleichsergebnis durch die Zugangskontrolle (2a),
dass
das Vergleichsergebnis von der Authentifizierungseinrichtung (5) über den Vermittlungsknoten (4) an die Zugangskontrolle (2a) ausgegeben wird und
**dadurch gekennzeichet, dass** das Vergleichsergebnis durch die Zugangskontrolle (2a) dem Anwender über den Vermittlungsknoten (4) mitgeteilt wird, wobei Signale von der Authentifizierungseinrichtung (5) ausgeblendet werden.

2. Verfahren nach Anspruch 1, **dadurch gekennzeichnet, dass** das Telekommunikationsnetz (3) ein ISDN-Netz ist.

3. Verfahren nach Anspruch 2, **dadurch gekennzeichnet, dass** die B-Kanäle derart verschaltet werden, dass in dem Vermittlungsknoten (4) nur jeweils derjenige Empfangszeitschlitz für Signale von der Authentifizierungseinrichtung (5) mit einem Sendezeitschlitz für Signale für das Anwendertelefon (1) gemischt wird, in welchem keine Authentifizierungssignale empfangen wurden.

4. Verfahren nach einem der vorangehenden Ansprüche, **dadurch gekennzeichnet, dass** das Vergleichsergebnis in Form von DTMF-Sequenzen zwischen Authentifizierungseinrichtung (5) und der Zugangskontrolle (2a) übertragen wird.

5. Verfahren nach Anspruch 1 oder 2, **dadurch gekennzeichnet, dass** die Stimmprobe wenigstens eine Sequenz umfasst mit mehreren Silben oder Worten, wobei
der Anwender mehrmals aufgefordert wird, ein Wort und/oder eine Silbe auszusprechen, wobei jeweils eine Stimmprobe aufgezeichnet wird,
die mehreren Stimmproben jeweils mit einem Vergleichsdatensatz verglichen werden, wobei eine Trefferquote ermittelt wird, und
die Freigabe oder Verweigerung des Zugriffs auf die gewünschte Information durch den Anwender in Abhängigkeit von der ermittelten Trefferquote durch die Zugangskontrolle (2a) erfolgt.

6. Verfahren nach einem der vorangehenden Ansprüche, bei dem eine Sprachfilterung zum Beseitigen von Störungen der Telefonleitung angewendet wird.

7. Verfahren nach einem der vorangehenden Ansprüche, bei dem die Ausblendung von Signalen von der Authentifizierungseinrichtung (5) aus den Signalen von der Zugangskontrolle (2a) für den Anwender (1a) in dem Vermittlungsknoten (4) erfolgt.

8. Verfahren nach einem der vorangehenden Ansprüche, bei dem die Zugangskontrolle (2a) ein interaktives Sprachdialogsystem ist.

9. Vermittlungsknoten (4) zum Vermitteln von Signalen in einem Telekommunikationsnetz (3) zwischen einem Anwendertelefon (1), einer Authentifizierungseinrichtung (5) und einer Datenbank (2) zum Autorisieren eines Zugriffs auf eine Datenbank (2) durch einen Anwender in dem Telekommunikationsnetz (3) nach einem der Ansprüche 1 bis 8,
dass
diejenigen Signale, die von der Authentifizierungseinrichtung (5) an die Zugangskontrolle (2a) der Datenbank (2) gesendet werden, aus den Signalen von der Zugangskontrolle (2a) der Datenbank (2) an das Anwendertelefon (1) ausgeblendet werden.

10. Vermittlungsknoten (4) nach Anspruch 7, **dadurch gekennzeichnet, dass** er ein ISDN-Vermittlungsknoten ist, bei dem die B-Kanäle derart verschaltet werden, dass nur jeweils derjenige Empfangszeitschlitz für Daten von der Authentifizierungseinrichtung (5) mit einem Sendezeitschlitz für Daten für das Anwendertelefon (1) gemischt wird, in welchem keine Authentifizierungssignale empfangen wurden.

11. Vermittlungsknoten (4) nach Anspruch 7 oder 8, **dadurch gekennzeichnet, dass** er eine Sprachfilterung zum Beseitigen von Störungen der Telefonleitung umfasst.

## Claims

1. Method for authorizing access to a database (2) by a user in a telecommunication network (3), the telecommunication network (3) comprising a user interface (1), an access control (2a) for the database (2) and an authentification device (5), connected with each other through a switching node (4) in the telecommunication network (3), the method comprising the following steps: the access control (2a) makes the user give a voice specimen,
the authentification device (5) compares the voice specimen with a comparative data record assigned to the user, which had been stored beforehand in a storage,
the access control (2a) grants or denies the user access to the desired information as a function of the result of the comparison,
the authentification device (5) outputting the result of the comparison through the switching node (4) to the access control (2a),
**characterized in that** the access control (2a) informs the user of the result of the comparison by means of the switching node (4), signals being masked out by the authentification device (5).

2. Method according to claim 1, **characterized in that** the telecommunication network (3) is an ISDN network.

3. Method according to claim 2, **characterized in that** the B-channels are interconnected in such a way that in the switching node (4), in each case only that receiving time slot for signals from the authentification device (5) is mixed with a sending time slot for the user telephone (1), in which no authentification signals were received.

4. Method according to any of the preceding claims, **characterized in that** the result of the comparison is transmitted between the authentification device (5) and the access control (2a) in the form of DTMF sequences.

5. Method according to claim 1 or 2, **characterized in that** the voice specimen comprises at least one sequence of several syllables or words, the user being asked several times to pronounce a word and/or a syllable, and each time a voice specimen being recorded,
each of the several voice specimens being compared with a comparative data record, determining a hit rate, and
the grant or denial of the user's access to the desired information being effected as a function of the hit rate determined by the access control (2a).

6. Method according to any of the preceding claims, in which a voice filtering device is used to eliminate interferences of the telephone line.

7. Method according to any of the preceding claims, in which the masking out of signals by the authentification device (5) from the signals of the access control (2a) for the user (1 a) is effected in the switching node.

8. Method according to any of the preceding claims, in which the access control (2a) is an interactive voice dialog system.

9. Switching node (4) for switching signals in a telecommunication network (3) between a user telephone (1), an authentification device (5) and a database (2) for authorizing an access to a database (2) through a user in the telecommunication network (3), according to any of claims 1 to 8,
those signals which the authentification device (5) sends to the access control (2a) of the database (2) being masked out from the signals sent by the access control (2a) of the database (2) to the user telephone (1).

10. Switching node (4) according to claim 7, **characterized in that** it is an ISDN switching node in which the B-channels are interconnected in such a way that in each case only that receiving time slot for data from the authentification device (5) is mixed with a sending time slot for data for the user telephone (1), in which no authentification signals were received.

11. Switching node (4) according to claim 7 or 8, **characterized in that** it comprises a voice filtering device for eliminating interferences of the telephone line.

## Revendications

1. Procédé d'autorisation d'accès à une base de données (2) par un utilisateur dans un réseau de télécommunication (3), ce réseau de télécommunication (3) comprenant un interface d'utilisateur (1), un contrôle d'accès (2a) pour la base de données (2) et un dispositif d'authentification (5), qui sont connectés l'un avec l'autre par un noeud de commutation (4) dans le réseau de télécommunication (3), ce procédé comprenant les pas suivants:
le contrôle d'accès (2a) fait l'utilisateur donner un échantillon de sa voix,
le dispositif d'authentification (5) compare l'échantillon de la voix avec un enregistrement de comparaison assigné à l'utilisateur, qui avait été mémorisé auparavant dans une mémoire,
le contrôle d'accès (2a) autorise ou refuse à l'utilisateur l'accès aux informations désirées en fonction du résultat de la comparaison,
le dispositif d'authentification (5) sortant le résultat de la comparaison au moyen du noeud de commutation (4) au contrôle d'accès (2a),
**caractérisé en ce que** le contrôle d'accès (2a) informe l'utilisateur du résultat de la comparaison au moyen du noeud de commutation (4), des signaux étant masqués par le dispositif d'authentification (5).

2. Procédé selon la revendication 1, **caractérisé en ce que** le réseau de télécommunication (3) est un réseau ISDN.

3. Procédé selon la revendication 2, **caractérisé en ce que** les canaux B sont interconnectés de façon que dans le noeud de commutation (4), à chaque fois seulement celui des créneaux temporels de réception pour des signaux provenant du dispositif d'authentification (5) est mélangé avec un créneau temporel d'émission pour le téléphone d'utilisateur (1), dans lequel aucun signal d'authentification n'a été reçu.

4. Procédé selon l'une quelconque des revendications précédentes, **caractérisé en ce que** le résultat de la comparaison est transmis entre le dispositif d'authentification (5) et le contrôle d'accès (2a) sous forme de séquences DTMF.

5. Procédé selon la revendication 1 ou 2, **caractérisé en ce que** l'échantillon de la voix comprend au moins une séquence de plusieurs of several syllabes ou mots, l'utilisateur étant invité plusieurs fois à prononcer un mot et/ou une syllabe, et chaque fois, un échantillon de la voix étant enregistré,
chacun des plusieurs échantillons de la voix étant comparé avec un enregistrement de comparaison, en déterminant un taux de coups, et
la permission ou le refus d'accès de l'utilisateur aux informations désirées étant donné en fonction du taux de coups déterminé par le contrôle d'accès (2a).

6. Procédé selon l'une quelconque des revendications précédentes, dans lequel un dispositif de filtration de la voix est utilisé pour éliminer des interférences de la ligne téléphonique.

7. Procédé selon l'une quelconque des revendications précédentes, dans lequel le masquage de signaux par le dispositif d'authentification (5) dans les signaux du contrôle d'accès (2a) pour l'utilisateur (1a) est effectué dans le noeud de commutation.

8. Procédé selon l'une quelconque des revendications précédentes, dans lequel le contrôle d'accès (2a) est un système de dialogue de voix interactif.

9. Noeud de commutation (4) pour commuter des signaux dans un réseau de télécommunication (3) entre un utilisateur (1) de téléphone, un dispositif d'authentification (5) et une base de données (2) pour autoriser un accès à une base de données (2) par un utilisateur dans le réseau de télécommunication (3), selon according l'une quelconque des revendications 1 à 8,
ceux des signaux que le dispositif d'authentification (5) émet au contrôle d'accès (2a) de la base de données (2) étant masqués dans les signaux émis par le contrôle d'accès (2a) de la base de données (2) à l"utilisateur (1) de téléphone.

10. Noeud de commutation (4) selon la revendication 7, **caractérisé en ce qu'**il est un noeud de commutation ISDN dans lequel les canaux B sont interconnectés de façon qu'à chaque fois seulement celui des créneaux temporels de réception pour des données provenant du dispositif d'authentification (5) est mélangé avec un créneau temporel d'émission pour le téléphone d'utilisateur (1), dans lequel aucun signal d'authentification n'a été reçue.

11. Noeud de commutation (4) selon la revendication 7 ou 8, **caractérisé en ce qu'**il comprend un dispositif de filtration de la voix pour éliminer des interférences de la ligne téléphonique.
